# EUROPEAN PATENT APPLICATION

(11) **EP 4 686 128 A1**
(43) Date of publication of application: **28.01.2026**
(21) Application number: 24191036.3
(22) Date of filing: 26.07.2024
(51) Int. Cl.: H04L 5/00, H04W 48/12, H04W 72/23

(54) **COMMUNICATION APPARATUS AND BASE STATION INVOLVED IN INDICATION OF COMMON CHANNEL ADAPTATION**

(71) Applicant: Panasonic Intellectual Property Corporation of America, Torrance, CA 90504 (US)
(72) Inventor: KURUVATTI, Nandish, 63225 Langen (DE); LI, Hongchao, 63225 Langen (DE); SUZUKI, Hidetoshi, Osaka, 571-8501 (JP); HORIUCHI, Ayako, Osaka, 571-8501 (JP)
(74) Representative: Grünecker Patent- und Rechtsanwälte PartG mbB

(57) **Abstract**

Provided are a communication apparatus, a base station, and methods for a communication apparatus and, respectively, a base station. The communication apparatus comprises a transceiver, which, in operation, receives, via one or both of a physical downlink control channel, PDCCH or system information block, SIB, an indication regarding adaptation of resources for a common channel, wherein the indication indicates one or more adaptation parameters; and circuitry, which, in operation, determines, based on the indication, valid resource occasions for the common channel. The transceiver, in operation, performs transmission, reception, or monitoring of the common channel on the valid resource occasions.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

In an embodiment, the techniques disclosed here feature a communication apparatus comprising a transceiver, which, in operation, receives, via one or both of a physical downlink control channel, PDCCH or system information block, SIB, an indication regarding adaptation of resources for a common channel, wherein the indication indicates one or more adaptation parameters; and circuitry, which, in operation, determines, based on the indication, valid resource occasions for the common channel. The transceiver, in operation, performs transmission, reception, or monitoring of the common channel on the valid resource occasions.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: shows an exemplary architecture for a 3GPP NR system;
- **Fig. 2**: illustrates configuration of legacy and additional PRACH resources;
- **Fig. 3**: illustrates distribution of legacy and additional PRACH resources in time domain.
- **Fig. 4**: illustrates an example of condensed PRACH resource occasions in time domain;
- **Fig. 5**: illustrates an example of PRACH resource configurations with overlapping resources for legacy and additional PRACH resources;
- **Fig. 6**: is a block diagram showing an exemplary communication system comprising a user equipment (UE) and a base station;
- **Fig. 7**: is a block diagram showing exemplary common channel adaptation circuitry of a user equipment;
- **Fig. 8**: is a block diagram showing exemplary common channel adaptation circuitry of a base station;
- **Fig. 9**: is a flow chart showing method steps of a communication method for a communication apparatus;
- **Fig. 10**: is a flow chart showing method steps of a communication method for a base station;
- **Fig. 11**: illustrates exemplary DCI based signaling for PRACH resource adaptation;
- **Fig. 12**: illustrates time windows delimiting valid PRACH occasions;
- **Fig. 13**: illustrates time windows delimiting valid PRACH occasions at different temporal levels;
- **Fig. 14**: illustrates a time window delimiting invalid PRACH occasions;
- **Fig. 15**: illustrates bitmaps indicating valid PRACH occasions;
- **Fig. 16**: is a flow chart showing exemplary signaling steps by a UE and a base station for DCI and SIB1 based signaling of PRACH adaptation parameters;
- **Fig. 17**: is a flow chart showing exemplary signaling steps by a UE and a base station for DCI signaling of PRACH adaptation parameters;
- **Fig. 18**: is a flow chart showing exemplary signaling steps by a UE and a base station for DCI signaling of PRACH adaptation parameters;
- **Fig. 19**: is a flow chart showing method steps of a communication method for a communication apparatus;
- **Fig. 20**: illustrates alignment of PDCCH monitoring occasions with PRACH occasions; and
- **Fig. 21**: shows exemplary functional split options in 5G O-RAN.

### DETAILED DESCRIPTION

### 5G NR system architecture and protocol stacks

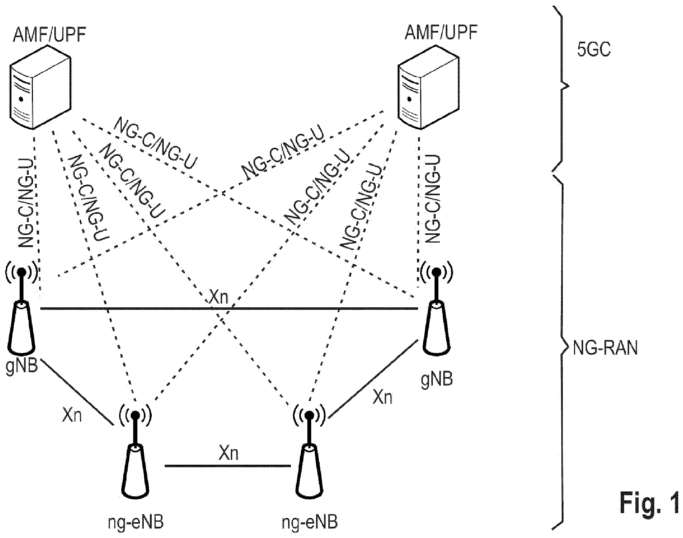

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Network energy saving (NES)

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-/inter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block 1) for UEs in idle/inactive mode. This includes triggering method by uplink wake-up-signal using an existing signal/channel, wake-up-signal configuration provisioning to UE, and information exchange between gNBs at least for the configuration of wake-up signal, if necessary.

Thirdly, adaptation of common signal/channel transmissions is to be specified, including adaptation of SSB in time domain, e.g. adapting periodicity, and adaptation of PRACH (physical random access channel) in time domain (a further issue for study and possible specification is adaptation of PRACH in spatial domain, e.g. non-uniform PRACH resources per SSB), and adaptation of paging occasions including confining the paging occasions in the time domain. Therein, it is desirable to have no negative impact to legacy UEs, unless significant benefits are shown.

Fourthly, the corresponding core requirements for the above features are to be specified.

### PRACH adaptation in time domain

In the following, adaptation of PRACH in time domain will be discussed as an example of the common channel adaptation. It is noted that although details issues regarding common channel adaptation are exemplified for PRACH, the present disclosure generally relates to common channel adaptation, including other common channels, such as paging, or SSB (synchronization signal block).

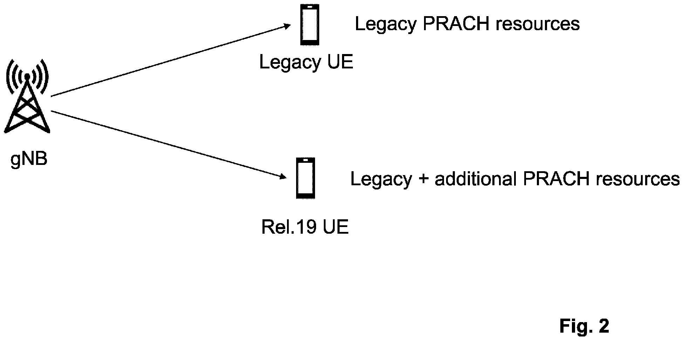

As mentioned above, in 3GPP 5G Release 19, PRACH adaptation in time domain is being considered. For instance, a gNB may have legacy PRACH resources and additional PRACH resources configured. As shown in **Fig. 2****,** legacy UEs of releases prior to Release 19 can use legacy PRACH resources, and Rel. 19 UEs can use both legacy resources and additional PRACH resources. In a case where legacy PRACH resources are sparsely present in time domain, time domain adaptation of PRACH can be carried out for the NES UEs on the additional PRACH resources, in accordance with the requirements of the gNB. An example of a configuration of legacy and additional PRACH resources in time domain is illustrated in

### Fig. 3.

Regarding overlap between additional PRACH resources for NES-capable Rel. 19 UEs and legacy PRACH resources, the following cases may be supported (it is noted that the functionality in the disclosure for Rel. 19 refers to Releases from Rel. 19 onwards, including future releases):
- Case 1: There is no-domain overlap between the additional PRACH resources for NES-capable UEs and the PRACH resources for legacy UEs.
- Case 2: There is time-overlap but no overlap in frequency domain between the additional PRACH resources for NES-capable UEs and the PRACH resources for legacy UEs
- Case 3: additional PRACH resources for NES-capable UEs and legacy PRACH resources overlap neither in time nor frequency domains

Possibly, an additional case may be supported where a full or partial overlap in both time and frequency may be allowed. It is noted further that the above description of cases does not preclude a discussion for the case where the configuration for additional PRACH resources contains legacy PRACH resources. In such a case, additional PRACH resources and legacy resources may have the same configuration, which may include e.g. the configuration index, time and frequency resource space, and other PRACH configuration parameters being the same.

For the adaptation of PRACH in time domain, the additional PRACH resources may be configured based on at least a PRACH configuration index. The PRACH configuration index defines a pointer to a row within lookup table as specified e.g. by 3GPP TS 38.211, see e.g. 3GPP TS 38.211, Physical channels and modulation, V18.3.0 (2024-06), section 6.3.3.2 "Mapping to physical resources and Tables 6.3.3.2-2 to 6.2.2.3-4. Thereby, the PRACH configuration index specifies parameters including time and frequency resources in terms of radio frames (whether PRACH occasions exist in even or odd radio frames), subframe number, number of PRACH slots within subframe, time domain PRACH occasions within PRACH slot, and PRACH duration in symbols, as well as preamble format. A UE obtains a PRACH configuration index e.g. from system information (SIB1, system information block 1).

It needs to be specified whether the PRACH configuration index for the additional PRACH resources for NES capable UEs may be the same or different from the PRACH configuration index for legacy PRACH resources. For instance, there may be a common lookup table or separate lookups tables provided for legacy and additional PRACH resources.

When the PRACH configuration index for the additional PRACH resources is same as the PRACH configuration index for the legacy resource, it is to be studied which additional parameters are to be defined for determining the additional PRACH resources. Therein, possible parameters to be studied include the PRACH configuration period, which may be scaled or adjusted, an additional timing offset, and adjustment of the parameters of the PRACH configuration (e.g. as specified in the lookup table), such as (x,y) value and slot number of the PRACH configuration, or parameters relating to muting and/or masking of PRACH resource occasions (random access occasions or, for short, "ROs"). The parameters (x,y) indicate whether PRACH occasions exist in even or odd radio frames and indicate a PRACH configuration period (e.g. a duration of one frame (10 ms), or two frames (20 ms)). "Muting" and "masking" refer to techniques by which the gNB signals to the UE that PRACH resource occasions among configured PRACH resource occasions are not available or to make the PRACH resources unusable for the UE.

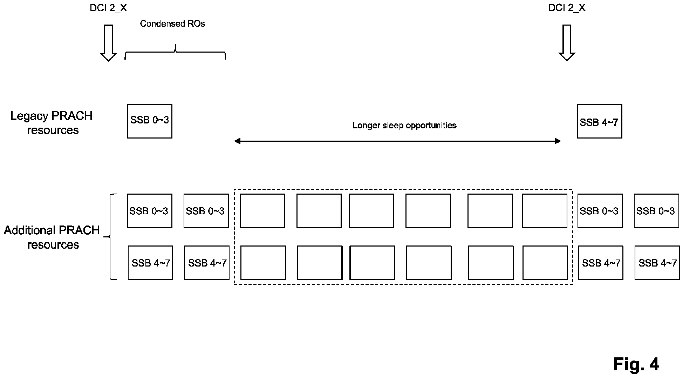

When the PRACH configuration index is different from the from the PRACH configuration index for the legacy resource, additional mechanisms and/or parameters may need to be studied as well. These may include muting or masking of ROs, e.g. for the case when the PRACH configuration index for the additional PRACH resources indicates resources containing legacy PRACH resources. It may be further considered whether parameters to facilitate condensed/cluster RACH resources in time domain, illustrated in **Fig. 4****,** are needed, and such parameters may be specified.

Further, the following options for the adaptation mechanism for the additional PRACH resources for NES capable Rel. 19 UEs are studied: A first option is PRACH resource adaptation based on higher-layer signalling. A second option is layer 1 (L1, physical layer) based adaptation to indicate whether additional PRACH resources provided by semi-static signalling are available or not, possibly re-using existing DCI (downlink control information) formats. As a third option, adaptation of PRACH transmission according to predefined condition(s) is considered. As a fourth option, L1-based adaptation may be used to indicate whether a subset of the additional PRACH resources provided by semi-static signalling are available or not. Herein, the level for time-domain adaptation may need to be specified, e.g. whether a subset of the additional PRACH resources is in RO level, SSB-to-RO mapping cycle level, PRACH association period level, and/or PRACH association pattern period level. Also for this option, re-use of existing DCI formats may be considered. Further, a fifth option may involve using cell DRX (discontinuous reception) for the adaptation mechanism for the additional PRACH resources.

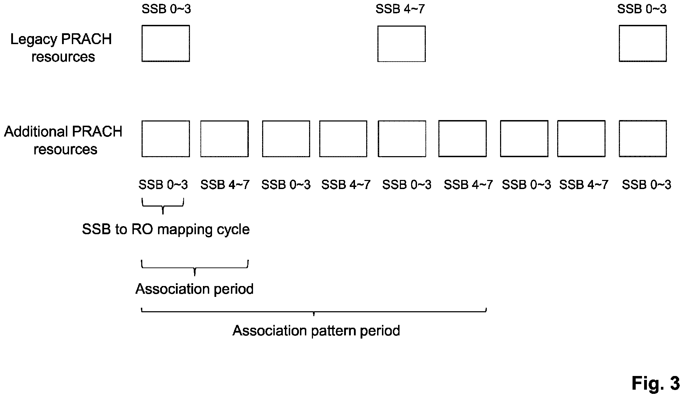

The above-mentioned time-domain levels of PRACH resource allocation are illustrated in Fig. 3. SSB-to-RO mapping refers to an association between Synchronization Signal Blocks (SSB) and PRACH resource occasions (ROs). Since in beamforming scenarios, each SSB is associated with a spatial direction or beam (or pair of transmission and reception beam), the SSB-to-RO mapping facilitates for the gNB to identify which beam a UE using a given RO is using. In the example depicted in **Fig. 3****,** each RO is mapped to a group of four SSBs corresponding to four beams ("SSB 0-3" or "SSB 4~7", the same notation is also used in other figures of the present disclosure) out of eight SSBs with indices 0 to 7. The SSB-to-RO mapping cycle is determined by the number of SSBs mapped to a RO, which is for SSBs in the example of **Fig. 3****.** However, other SSB-to-RO mapping, such as a one-to-one mapping between SSBs and ROs, are also possible.

As association period is a period where a configured number of SS/PBSCH blocks (Synchronization Signal / Physical Broadcast Channel blocks) are mapped at least once to PRACH occasions within the mapping cycle. SS/PBCH is a downlink transmission used by the UE in the cell search procedure, including the Primary Synchronization Signal, the Secondary Synchronization Signal, and the Physical Broadcast Channel. An association pattern period includes one or more association periods and is determined so that a pattern between PRACH occasions and SS/PBCH blocks repeats at most every 160 msec (see 3GPP TS 38.213, Physical layer procedures for control, V18.3.0 (2024-06), section 8.1 "Random access preamble", for a definition of association period and association pattern period).

It is noted that PRACH occasions not associated with SS/PBCH blocks after an integer number of association periods, if any, are not used for PRACH transmissions.

### UAC (Unified Access Control) Access Barring

Access control checks are required when the UE initiates transition from RRC idle to RRC connected mode. They are also required for UEs in RRC connected and inactive modes when certain events occur, e.g. when a mobile originated call (voice or video) or SMS (short message service) is initiated.

A UE obtains parameters to determine when an access barring check is required from the *uac-BarringInfo* within SIB1. An access barring check involves the UE generating a uniformly distributed random number between 0 and 1. If the random number is less than a barring factor provided as uac-BarringFactor in the *uac-BarringInfo* parameter set, the access attempt is permitted. Otherwise, the access attempt is barred. If an access attempt is barred, the UE generates a second uniformly distributed random number *rand* between 0 and 1, and the duration T390 that the UE treats the cell as barred for the corresponding access category is set equal to (0.7 + 0.6 × *rand*) × *uacBarringTime* seconds , where *uacBarringTime* is also provided in *uacbarringInfo.*

### Further issues

In view of the above, the inventors have identified the following issues to be considered in scenarios where time domain adaptation of additional PRACH resources (e.g. additional Resources for Rel. 19 UEs in addition to the legacy resources, as mentioned above) is to be carried out. One issue is how to convey the presence of additional PRACH resources and their adaptations to the UE.

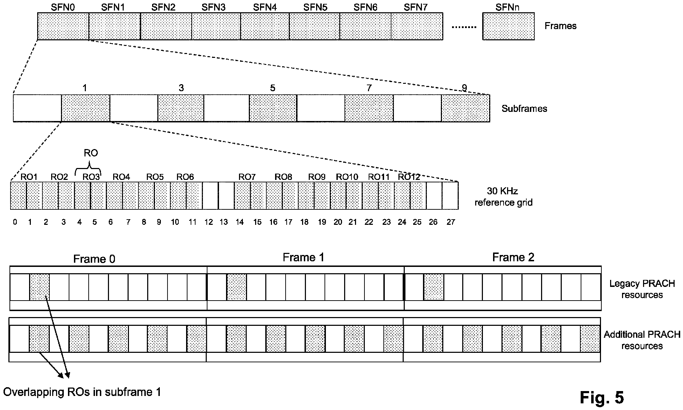

A further issue is how situations are to be handled where PRACH occasions of legacy PRACH resources are overlapping with PRACH resources of additional PRACH resources (in time and/or frequency domain). An example of such overlapping resources is shown in Fig. 5, where it is assumed that the PRACH configuration index for the additional PRACH resources is 107 and the PRACH configuration index for the legacy PRACH resources is 101. In accordance with above-mentioned Table 6.3.3.2-2 for Random access configurations for FR1 and paired spectrum/supplementary uplink, the configurations corresponding to these two indexes have the same values except on subframe level, where subframes 1,3,5,7, and 9 are configured for index 107 and only subframe 1 is configured for index 101. As can be seen in **Fig. 5****,** there are overlapping ROs in subframe 1 in each frame, which may result in an ambiguity at the gNB regarding SSB-to-RO mapping and detection of the correct SSB index that the UE is using.

A further issue is how to inform the UE of valid PRACH occasions, e.g. valid PRACH occasions among a set of configured PRACH occasions. Another point that the inventors have noted is to determine what the validity duration of PRACH occasions is. Furthermore, how often is PRACH adaptation required and when does it need to be conveyed to the UE? Moreover, an issue is regarding the question what channel and procedure are to be used for the time domain adaptation of the additional PRACH resources.

The inventors have also noted that flexible adaptation the additional PRACH resources may be performed so as to result in condensed PRACH occasions in time domain. As shown in **Fig. 4****,** this may facilitate providing longer sleep opportunities for the gNB where the gNB does not need to monitor for the PRACH, which may provide energy saving gains.

### Embodiments

In view of the above, the present disclosure provides techniques related to indication of common channel adaptation.

The present disclosure in particular provides base stations, which may include scheduling devices or scheduling apparatuses (such as scheduling nodes), corresponding methods for base stations, communication devices or communication apparatuses (e.g. adapted/configured to perform the function of a communication terminal in a communication system), corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

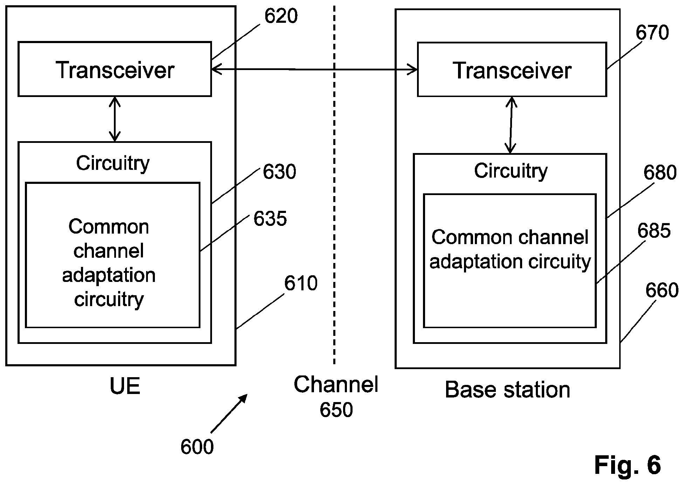

An example of such communication system is illustrated in **Fig. 6****.** The communication system 600 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 6** illustrates a general, simplified and exemplary block diagram of a communication apparatus 610 (which may be exemplarily assumed to be a user equipment (UE), radio apparatus, wireless communication apparatus, communication terminal or terminal apparatus) and a scheduling device or scheduling node (here exemplarily assumed to be located in a base station 660, e.g. in a LTE eNB (alternatively termed ng-eNB) or the gNB in 5G NR) in the communication system 600. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 610 may also be a sensor device, a wearable device, or a connected vehicle, or a controller of an automated machine in an industrial factory.

As illustrated in **Fig. 6****,** the communication apparatus 610 and the scheduling device or base station 660 (eNB/gNB) may communicate with each other over a (wireless) physical channel 650 respectively using their transceivers 620 (communication apparatus side) and 670 (base station side). Together, the base station 660 and the communication apparatus 610 may form the communication system 600. The communication system 600 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 6****,** the communication apparatus 610 may comprise a transceiver 620 and circuitry (or processing and/or control circuitry) 630, and the base station 660 may comprise a transceiver 670 (e.g. a transmitter and/or a receiver) and (processing and/or control) circuitry 680.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 610 and a base station 660, without implying any limitation to networks such as 3GPPP NR networks.

In the communication apparatus 610 provided by the present disclosure, shown in Fig. 6, the transceiver 620, in operation, receives, via one or both of a physical downlink control channel (PDCCH) or system information block (SIB), an indication regarding adaptation of resources for a common channel. The indication may indicate one or more adaptation parameters regarding the adaptation of the resources for the common channel. The circuity 630, in operation, determines, based on the indication, valid resource occasions for the common channel, and the transceiver 620, in operation, preforms one or more out of transmission, reception, or monitoring of the common channel on the valid resource occasions.

In the base station provided by the present disclosure, also shown in Fig. 6, the circuitry 680, in operation, determines one or more adaptation parameters regarding adaptation of resources for a common channel. The transceiver 670, in operation, transmits, via one or both of a physical downlink control channel, PDCCH or system information block, SIB, an indication regarding adaptation of the resources for the common channel and indicating the one or more determined adaptation parameters. The transceiver 670, in operation, further performs reception, transmission, or monitoring of the common channel on the valid resource occasions.

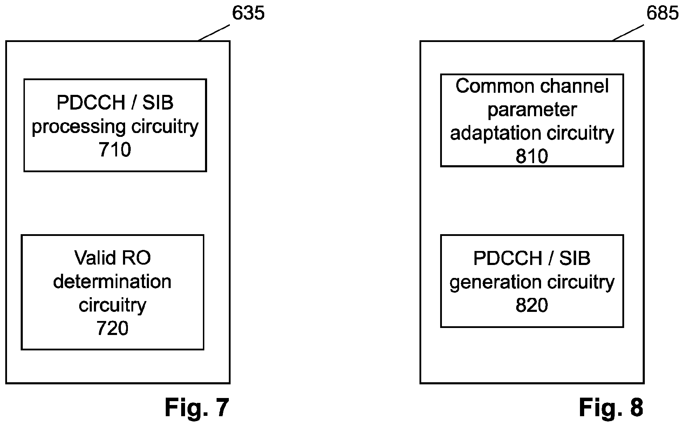

In Fig. 6, the UE circuitry 630 is exemplarily considered to comprise common channel adaptation circuitry 235, which, in operation, determines the valid resource occasions for the common channel based on the received indication. As is further shown in Fig. 7, the common channel adaptation circuitry 635 may comprise PDCCH / SIB processing circuitry 710 responsible for processing or evaluating the received signaling (PDCCH and/or SIB) and obtain therefrom the adaptation parameters, as well as valid RO determination circuitry 720 responsible for determining valid common channel resources for the transmission, reception, and/or monitoring to be performed on the common channel.

The gNB circuitry 680 is exemplarily considered to comprise common channel adaptation circuitry 685, which, in operation, determines the one or more parameters regarding the adaptation of resources for the common channel. As is further shown in Fig. 8, the common channel adaptation circuitry 685 may comprise common channel parameter adaptation circuitry 810 responsible for determining the adapted values of the parameters regarding the common channel, as well as PDCCH / SIB generation circuitry 820 responsible for writing the adaptation parameters for the common channel into the SIB and/or PDCCH that conveys the adaptation parameters.

It is, however, noted that the UE circuitries 630, 635, 710 and 720 as well as gNB circuitries 680, 685, 810 and 820 may implement more functionality than the above-mentioned, and the functionalities mentioned above are in general implemented by circuitries 630 and 680 without being limited to comprising the respective circuitries 635, 710 and 720 or 685, 810 and 820 described above.

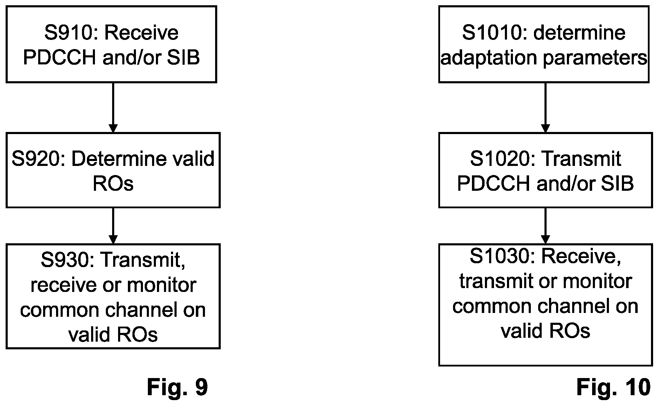

In correspondence with the above described communication apparatus 610, further provided is a communication method for a communication apparatus. As shown in Fig. 9, the communication method for a communication apparatus comprises a step S910 of receiving, , via one or both of a physical downlink control channel, PDCCH or system information block, SIB, an indication regarding adaptation of resources for a common channel, wherein the indication indicates one or more adaptation parameter. The method further comprises a step S920 of determining, based on the received indication, valid resource occasions for the common channel, and a step S930 of performing transmission, reception, or monitoring of the common channel on the valid resource occasions.

Furthermore, in correspondence with the above described base station 660, provided is a communication method for a base station. As shown in Fig. 10, the communication method for the base station includes a step S1010 of determining one or more adaptation parameters regarding adaptation of resources for a common channel. The method further includes a step S1020 of transmitting an indication regarding adaptation of the resources for the common channel. In step S1020, the indication is transmitted via physical downlink control information (PDCCH) and/or system information block (SIB) and indicates the one or more determined adaptation parameters. Furthermore, the method for the base station includes a step S1030 of performing reception, transmission, or monitoring of the common channel on the valid resource occasions.

In accordance with the present disclosures, as applies for the communication apparatus and the base station as well as the corresponding methods, "common channel", which may also be called "common signal", refers to a channel or signal, shared by a plurality of or even all UEs within a cell. Examples of common channel, to which the present disclosure is applicable, include SIB(s) (system information block), PRACH (Physical Random Access Channel), paging, or SSB. Thus, although some of the examples provided in this disclosure refer in particular to SIB1, the disclosure and its embodiments are also applicable to one or more of all the common channels. Although some examples provided in the present disclosure are related to PRACH resource adaptation, the present disclosure and its embodiments are also applicable to other common channels.

"Adaptation of resources for a common channel" may include indicating, e.g. from among previously configured resources, which resources are to be considered "valid" or "invalid", e.g. available for transmission and/or reception on the common channel. Previously configured resources may include a configuration as indicated e.g. by a configuration index such as the PRACH configuration index.

Furthermore or alternatively, "switching" or "adaptation" of a common channel and/or its resources may refer to the changing of an availability status from OFF (i.e. not available) to ON (i.e. available), of from ON to OFF. Adaptation may also refer to the changing of the common channel configuration, which may include one or more configurations from among the time domain resource (e.g. periodicity), spatial domain resource (e.g. beam indices or transmission configuration indicator (TCI) states), or frequency domain resource.

Determining, transmission and reception of adaptation parameters, as described herein may include determining, transmission and values of adaptation parameters. Furthermore, it may be determined which adaptation parameters are to be adapted and signaled accordingly.

As will be described further, resources for the common channel, to be adapted in accordance with an indication, may include time domain resources at one or more temporal levels of granularity including radio frames, subframes, slots, resource occasions, or symbols, wherein the definition of these time resources may be in accordance with the specifications of 5G NR. In addition, resources for the common channel may include further domains such as frequency domain, spatial direction, code domain, etc.

As described above, a communication apparatus 610 (e.g. a UE) receives an indication from a base station (e.g. gNB) regarding adaptation of resources for a common channel, e.g. for one or more cells.

In accordance with examples and embodiments that will be described further, the indication may include one or more out of the following parameters or indications:
- one or more time windows delimiting the valid resource occasions or invalid resource occasions for the common channel within a set of configured candidate resource occasions (e.g. a "validity window" or an "invalidity window" to be described further),
- one or more bitmaps or codepoints indicating the valid resource occasions, and/or
- one or more configuration parameters of a configuration of the resources for the common channel that are to be adapted.

Configuration parameters relevant for adaptation, in the example of PRACH as the common channel to be adapted, may include, but are not limited, to the aforementioned ORACH configuration index (prach-Configurationlndex), msg1-FDM, and/or ssb-perRACH-Occasion, or corresponding as well as similar parameters related to other common channels.

Moreover, in the example of PRACH as a common channel, the adaptation may relate to one or both of the previously discussed legacy PRACH resources and additional PRACH resources for NES capable UEs.

The indication of the above-mentioned parameters and indications may be provided to the UE via one or both of PDCCH (within downlink control information (DCI), e.g. a new DCI format or an extension of an existing DCI) and/or system information (e.g. SIB1).

Upon receiving the indication, the UE determines the valid resource occasions where it can carry our transmission or reception on the common channel or start a procedure, e.g. carrying out PRACH transmissions, starting a PRACH procedure, receiving paging, etc.).

As mentioned above, the indication regarding the common channel resource adaptation may include a validity window or a plurality of validity windows, which is a time window within which the candidate resource occasions are to be considered valid by the UE and usable for transmission, reception, monitoring, random access etc. Here, resource occasion candidates refer e.g. to resource occasions as indicated by a configuration from system information (e.g. SIB1) or higher layer signaling (e.g. RRC), such as the aforementioned PRACH configuration index. Such resource occasion candidates are determined to be actual valid resource occasions using the common channel related signaling in the SIB or PDCCH. Resource occasion candidates outside the validity window are to be considered invalid by the UE and not to be used on the common channel. In other words, only the resource occasions or resource occasion candidates inside the boundaries of the validity window are to be considered valid by the UE and to be used for the common channel.

The indication of the validity window may be DCI based or SIB1 based, wherein the DCI may be an adaptation, extension or enhancement of a group common DCI, such as DCI format 2_0/2_6/2_7/2_9, or (for paging) DCI format 0_1, or a UE specific DCI.

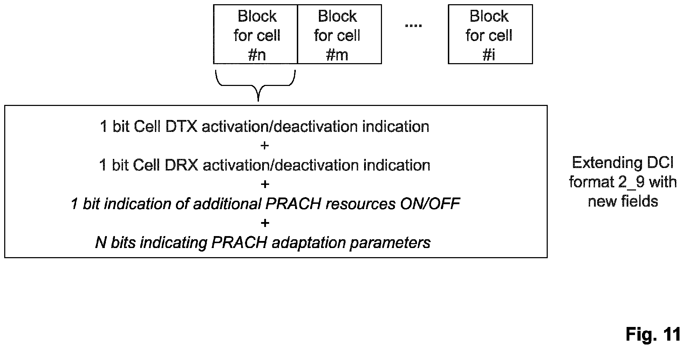

An example of additional signaling by extension of DCI format 2_9 with new fields in the block for a cell (exemplified by cell #n) is shown in **Fig. 11** for PRACH as a common channel, where additional indications related to the common channel resource adaptation are shown in italics. As shown, the indication related to the common channel adaptation may include adaptation parameters for the common channel (e.g. specifying the boundaries and/or duration of the validity window, and/or configuration parameters as mentioned above). In addition, a one-bit indication or flag may be provided indicating whether e.g. the additional PRACH resources for are switched ON or OFF. Upon receiving the PDCCH carrying the DCI, and based on the indication, the UE determines the valid common channel resource occasions, e.g. valid PRACH occasions (or "random access occasions", ROs) of one of or both additional and legacy PRACH resources described above.

It is noted that such a one-bit indication may also be provided to other configured resources or resource candidates different from the additional PRACH resources, including other common channels.

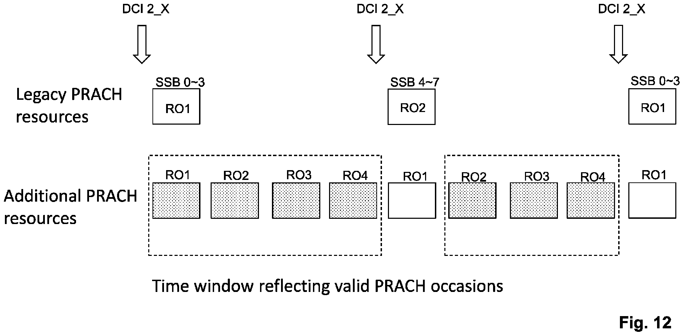

Accordingly, the "legacy" PRACH resources and the "additional" PRACH resources for NES capable UEs (Rel. 19 onwards) described above and shown e.g. in Fig. 12 are an example of first candidate resource occasions for a common channel and second candidate resource occasions for the common channel, wherein the second candidate resource occasions are more densely distributed in time than the first candidate resource occasions.

The one-bit indication shown in **Fig. 11** is an example of an indication indicating whether the second candidate resource occasions more densely distributed in time are activated.

It is further noted that the DCI signaling, as exemplified in **Fig. 11** by DCI format 2_9, is not limited to the validity window, but may also include other indications as also shown in this disclosure.

An exemplary illustration of indication of validity windows in provided in **Fig. 12****,** where "DCI 2_X" may correspond, for example, to one of the above-mentioned DCIs, and SSB 0-3 and 4-7 refer to an SSB-to-RO mapping in accordance with the description of Fig. 3. Time windows reflecting valid PRACH occasions ("validity windows") are illustrated by dashed lines.

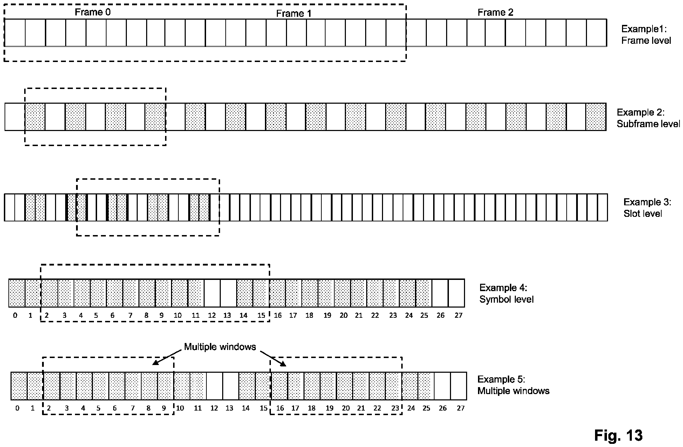

Parameters indicating a time window such as the validity window may be a starting and ending, e.g. a start point (starting time or starting boundary) and end point (ending boundary) of the window. For instance, starting time and ending time may be provided at one or more levels in time domain, e.g. system frame number, subframe, slot, symbol, and/or resource occasion (e.g. random access resource occasions (ROs)), as illustrated in **Fig. 13****.** The resource occasions may be indicated in accordance with a configuration e.g. by configuration index. For instance, resource occasion level indication may be used alternatively to symbol level indication, e.g. when ROs comprise more than one symbol per RO. Alternatively, a start point and a duration of the window may be indicated at one or more levels out of frames, subframes, slots, symbols, and/or resource occasions. Moreover, a combination of start and end points on one level with start point and duration on another level is also possible.

The above-described indication of start and end values, or start value and duration of the SFN (system frame number), subframe number, slot number, symbol, may assist the UE in obtaining boundaries of validity window.

Moreover, within one indication, indications of a plurality of validity windows (as illustrated by the bottommost part of **Fig. 13**), are also possible.

After the end boundary of the validity window has passed elapses, DCI or SIB1 needs to be obtained by the UE to obtain latest common channel adaptation information before starting a new procedure (e.g. PRACH procedure) on the common channel.

Accordingly, accurate start and stop boundaries with symbol level granularity or granularity up to subframe or frame level are possible, as required.

As mentioned above, the indicated time window or time windows may alternatively delimit invalid resource occasions from among configured resource occasions.

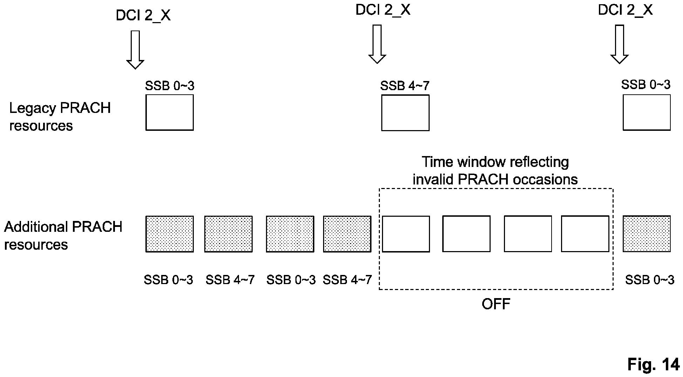

As illustrated in **Fig. 14****,** the UE may receive a PDCCH or SIB indicating information of common channel adaptation in the form of a window or windows reflecting the invalidity of the common channel resource occasions such as ROs (e.g. configured candidate resource occasions) within these windows. Upon receiving the indication, and based on the indication, the UE determines the common channel resource occasions that cannot be used for transmissions or receptions in the common channel. In the example of PRACH, the determination may be made for one of both of additional PRACH resources for NES capable Rel. 19 UEs and for legacy ROs.

Regarding possible DCI formats for the signaling of the invalidity, as well as indication of boundaries or starting boundary and duration, the same DCI formats (e.g. extensions of existing DCls or new DCls that may be group common or UE specific), indications and levels may be used as described above for the validity window. Furthermore, one indication may include more than one invalidity window.

It is noted that switching between indication of a validity window and indication of an invalidity window is also possible. For instance, the indication regarding resources for the common channel may further include an indication, e.g. a one bit indication, which indicates whether the time window is a validity window delimiting valid resource occasions or an invalidity window delimiting invalid resource occasions. Based on the indication, the UE may then determine whether to interpret the indicated parameters of the time window (e.g. boundaries or start boundary and duration) as a validity window or an invalidity window.

Such switching may be applied by the gNB in scenarios where the amount of bits required for signaling the resource occasions to be used varies, and may be larger for a validity window at one instance and larger for an invalidity window at another instance.

As an alternative to the above-mentioned parameters defining a validity window, the PDCCH or SIB may indicate the information regarding common channel adaptation in the form of a bitmap or codepoint indicating the validity of common channel resource occasions or candidate occasions. Upon receiving the indication, and based on the indication, the UE determines the common channel resource occasions that can be used for transmissions or receptions in the common channel (e.g. one or both of additional and legacy PRACH resources or resource occasions for other common channels). For instance, in the bitmap, for each time resource (at a level of frame, subframe, slot, symbol, and/or resource occasions) covered by the bitmap, "1" may indicate that occasions within a time resource are valid, and "0" may indicate that occasions within the time resource are invalid.

As described above for the validity window, for DCI-based indication of the bitmap or codepoint may use extensions of existing DCI formats such as the aforementioned formats or new DCI formats, e.g. group common or UE specific DCI.

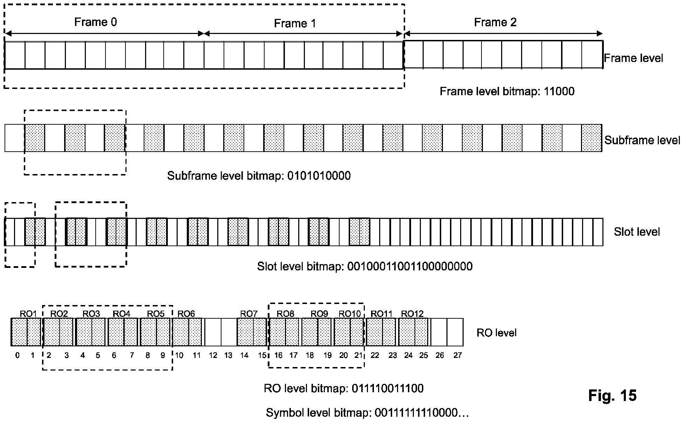

In the indication, bitmaps may be provided respectively on one or more of frame level, subframe level, slot level, and resource occasion level (if resource occasions such as ROs are configured for the common channel), as shown in **Fig. 15****.** As an alternative to the resource occasion level bitmap, e.g. if there is no configuration of resource occasions for the common channel, the indication may also be provided on as a bitmap a symbol level.

As an alternative to the indication by bitmap, a codepoint may be indicated, e.g. as a numerical value that maps to a configured table.

Provision of a bitmap or codepoint may be facilitate reading and processing for the UE to identify the resource occasions to be used for a common channel, and allow flexible indication of validity or invalidity of ROs, e.g. in cases where indication of the same occasions via validity window or invalidity window would require multiple windows to indicate the same. Furthermore, a bitmap may directly indicate frames, subframes, slots and symbols and can be applied in cases where candidate resource occasions are not configured or are not configured on all time levels. Alternatively, shorter bitmaps may be sufficient if the bitmaps refer to previously configured resource occasions.

In the above description, validity windows, invalidity windows, bitmaps and codepoints have been described to indicate a timing of valid resource occasions on a of a common channel. However, according to some embodiments of the present disclosure, a DCI of SIB may also be used to update one or multiple configuration parameters (e.g. prach-Configurationlndex, msg1-FDM, ssb-perRACH-Occasion).

For instance, the indication related to common channel adaptation may include an index (e.g. one or more bits) specifying a set of the one or more adaptation parameters out of a plurality of configured candidate sets of the one or more adaptation parameters.

Configuration parameters, possibly in combination with timing indications of resource occasions, may be grouped into sets, on which the UE may informed via RRC signaling (e.g. if the UE is in RRC connected mode and able to receive RRC signaling). A UE can receive the RRCRRC configuration may indicate a plurality of sets of configurations to the UE, such as two sets Set0 (validity window0 and/or bitmap0, prach-Configurationlndex0, ...) and Set1 (validity window1, bitmap1, prach-Configurationlndex1, ...). The DCI or SIB1 may then dynamically indicate an index of a set to be used. For instance, if there are two sets of configuration, then one bit over DCI is sufficient to indicate the usable set of configurations or update of PRACH parameters.

With the configuration of sets of parameters, update of multiple sets of PRACH parameters could be indicated dynamically to the UE via DCI. Furthermore, with the grouping of parameters into sets, the update may be dynamically signaled with a reduced signaling overhead.

Apart from the time indication of common channel resource occasions, which may be indicated in DCI or SIB as described above, other adaptation parameters for the common channel may need to be obtained by the UE, such as configuration parameters. Such configuration parameters may include, for PRACH, parameters from *RACH-ConfigCommon* information element, such as msg1-FDM, ssb-perRACG-Occasion, etc. or similar parameters, or for other common channels corresponding and similar configuration parameters for the common channel).

As described in the following, the present disclosure provides techniques for updating these configuration parameters even after the UE has initially connected to the cell and received an initial version of these configuration parameters via SIB1.

For instance, the UE may obtain the configuration parameters by the following ways:
Firstly, the configuration parameters or their adaptation may be obtained directly in the DCI (e.g. via the PDCCH that may also carries the time parameters), as mentioned above. This way of obtaining the configuration parameters is a variant to the previously described configuration of sets of adaptation parameters. Direct indication in the DCI is also possible for UEs that are not in RRC connected mode, e.g. using DCI formats that the UE can decode even in idle mode before it gets connected.

Secondly, the configuration parameters may be obtained by the UE from other cells. For instance, SIB1 of other cells, e.g. of a neighboring cell or a reference cell for the cell on which the UE camps or to which the UE is connected, may carry these parameters (e.g. in a case where the present cell for which the parameters need to be adapted does not transmit SIB1).

Thirdly, the SIB1 of the cell where the adaptation of the common channel needs to be signaled may carry the configuration parameters. The UE may obtain the parameters. Furthermore, the UE may store a valid version of the configuration parameters for a certain period. When the period expires, the UE needs to obtain the information from SIB1 or DCI again. It is noted that a period of validity of configuration parameters may also apply for configuration parameters carried by DCI.

With the above ways for obtaining configuration parameters, the adaptation parameters indicated via DCI, SIB1, and other methods mentioned may enable producing condensed resource occasions for the common channel and thereby provide longer sleep opportunities at gNB and energy saving gains.

As described above for the third option, the one or more configuration parameters, indicated via SIB or PDCCH, may include parameters with a time of validity specified by one or more timer values. In other words, a time of validity of one or more configuration parameters may be limited such that the configuration parameters need to be updated when the time of validity expires. The timer value may be included in the SIB.

For instance, when a UE camps on a cell and initially receives the SIB1, it may obtain from this SIB1 the timer value which may remain valid even when configuration parameters are updated. Accordingly, the UE needs to obtain the timer value(s) only once, e.g. when camping. However, it is also possible that the timer value may be updated as well.

As an example, the inventors have recognized that access barring for a common channel may be time sensitive. In particular, the number of UEs camped on or connected to the cell that may try to access the common channel may vary over time, it may be desirable to update the barring factor and provide a mechanism to enforce the UE to obtain the latest or most current value of the barring factor (e.g. indicated in SIB1 in the *uac-Barringlnfo* parameter set).

One of the parameters with a limited time of validity, for which a timer may be provided, may be a barring factor restricting access to the common channel.

In addition, in view of the above-discussed time sensitivity of access barring for the common channel, two timers may be configured. For instance, the SIB may include a first timer value specifying a first time of validity of the barring factor (e.g. *uac-BarringFactor*) and a second timer value specifying a second time of validity of other adaptation parameters different from the barring factor, wherein the first timer value may be smaller than the second timer value.

With the provision of the timer value or two timer values as mentioned above, a UE is assisted in checking the validity of the stored version of the configuration parameters for the common channel, and it may facilitate triggering a UE to obtain the latest (most recent) adaptation parameters for PRACH or other common channels.

As described above, the barring factor is stored in and obtained via SIB1. Accordingly, even when DCI indication is used for adaptation of other parameters of the common channel (e.g. validity of resource occasions and /or configuration parameters), the SIB1 needs to be required if the relevant valid timer for the barring factor for the common channel expires.

Alternatively, a PDCCH including the indication regarding adaptation of the common channel resources may include the barring factor for restricting access to the common channel.

The relevant uac-BarringFactor sent with DCI may facilitate assisting the UE in checking validity of stored common channel parameter(s) and in obtaining valid newest values of the parameters in case the validity of uac-BarringFactor is limited.

As a further alternative, in some embodiments, a barring factor such as *uacBarringFactor* may not be applied to PRACH adaptation. In other words, in such case, access to the common channel is not restricted by a barring factor.

Therefore, when access to the common channel is not restricted, a collision situation is not considered for PRACH adaptation and PRACH can be sent always for PRACH adaptation.

Furthermore, according to some embodiments, switching between restriction and no restriction of the common channel may also be possible. For instance, the indication in the SIB or PDCCH may include a bit indicating whether access barring for the common channel is switched on or off, as well as the barring factor.

As mentioned above, the present disclosure provides embodiments where the validity of a barring factor of access barring for a common channel is limited by a timer value, which may be different from a timer value specifying the validity of other configuration parameters for the common channel. Furthermore, the barring factor related to the the common channel (e.g. PRACH) may be separated from the barring factor for other services. In particular, in some embodiments, the barring factor restricting access to the common channel may be different from a barring factor restricting access to other services.

Furthermore, in accordance with some of the above-described embodiments, the validity of the barring factor for access to the common channel is limited by a timer or by a plurality of timers including a dedicated timer for the validity of the barring factor. Alternatively, the validity of the barring factor and/or other configuration parameters may be limited by the expiry of the time window or windows of validity or invalidity as or by the time duration (e.g. number of frames, subframes or slots, resource occasions, etc.) indicated by a bitmap or codepoint. For instance, when the UE needs to obtain a new indication of the validity time of resource occasions, it may at the same time obtain from the SIB or PDCCH a new value of the barring factor of other configuration parameters.

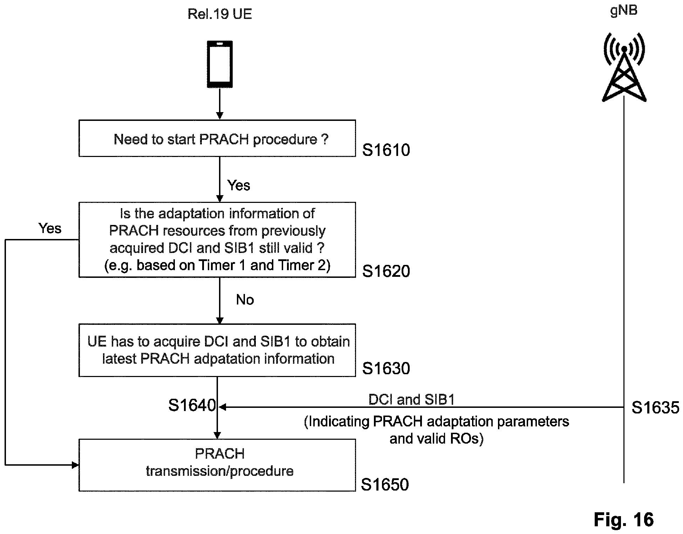

In accordance with the present disclosure, an indication regarding adaptation of resources for a common channel may be provided via SIB, PDCCH or a combination of SIB and PDCCH, as illustrated in **Fig. 16 to 18****.**

**Fig. 16** shows a case where the indication regarding resource adaptation for the common channel is signaled via both DCI and SIB1. In particular, if the UE needs to start a new procedure on the common channel exemplified by PRACH (yes in step S1610), the UE checks in step S1620 whether the adaptation information of PRACH resources from previously acquired DCI and SIB1 is still valid (e.g. based on a timer value or timer values of a first timer (Timer 1) and a second timer (Timer 2) and/or based on a validity duration or indication duration covered by a time window indication or bitmap, codepoint etc. If yes, the UE may directly proceed with the transmission, reception or common channel procedure in step S1650. If no, the UE has to acquire DCI and SIB to obtain the latest adaptation information, as shown in step S1630. In step S1635, the gNB transmits the DCI and the SIB indicating the valid adaptation parameters and valid ROs, which the UE receives in S1640 before proceeding with the common channel transmission or procedure in step S1650.

For instance, **Fig. 16** may relate to a case where time indications of valid resources are indicated via PDCCH and the barring factor is indicated via SIB. Other configuration parameters, e.g. *prach-ConfigurationIndex, msg1-FDM, ssb-perRACH-Occasion and*/*or similar parameters,* may be indicated wither by SIB or by PDCCH.

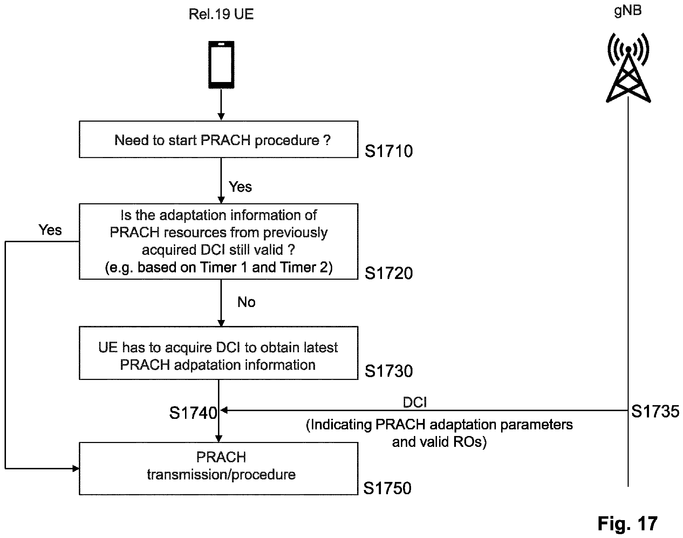

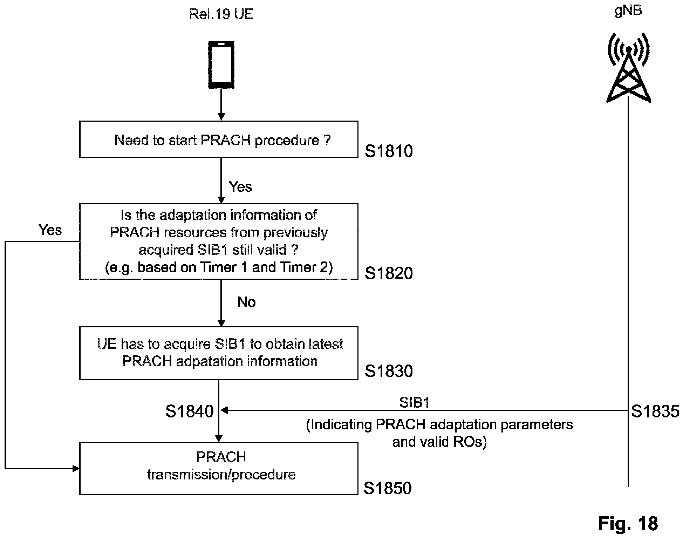

It is noted that in Fig. 16, steps S1640 and S1650 are exemplary implementations of steps S910 and S930 of the UE method shown in Fig. 9, and step S1635 is an exemplary implementation of step S1020 of the gNB method shown in Fig. 10. The same applies to the corresponding steps shown in **Figs. 17** **and** **18****.**

**Fig. 17** shows method steps for a case where the indication is made only via DCI. Steps S1710 to S1750 correspond to steps 1610 to 1650 from Fig. 16, with the difference in steps S1720, S1730, S1735 and S1740 that the UE needs to acquire only DCI to obtain the latest updated adaptation information for the common channel, rather than obtaining both DCI and SIB1. For instance, the DCI-based indication of Fig. 17 may relate to a case where a barring factor is not applied to the common channel, or where the updated values of the barring factor and/or other configuration parameters are included in the DCI.

L1 based adaptation of parameters for a common channel via PDCCH, as shown in Figures 16 (combined with SIB) and Fig. 17 (only PDCCH), may supporting dynamic PRACH adaptations of the common channel and may facilitate dynamic network energy saving operation enabling energy saving gain.

**Fig. 18** shows method steps for indication regarding common channel adaptation based on SIB only. Steps S1810 to S1850 correspond to steps 1610 to 1650 from Fig. 16, with the difference in steps S1820, S1830, S1835 and S1840 that the UE needs to acquire only the SIB to obtain the latest updated adaptation information for the common channel, rather than obtaining both DCI and SIB1.

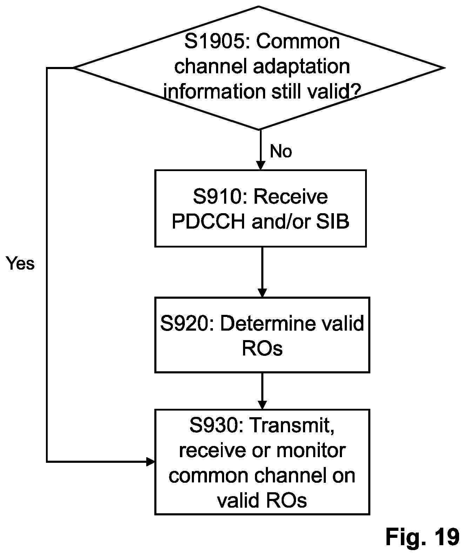

In each **Figs. 16 to 18****,** a step is shown where the UE checks whether the adaptation information regarding adaptation of resources is still valid (steps S1620, S1720 and S1820). For instance, as shown in the figures, a timer or timer values may be used for this check of validity, e.g. with reference to a barring factor or other configuration parameters. Alternatively or additionally, the check may comprise checking whether the boundary of a time window (validity window or invalidity window for resource occasions) or a range indicated by a bitmap is still valid. As can be seen, the checking step can be present when adaptation parameters are signaled via one or both of SIB and/or PDCCH. This is shown, more generally, in **Fig. 19****,** which shows an embodiment of the UE method shown in **Fig. 9** where an additional step S1905 of determining (e.g. checking) whether the common channel adaptation information (e.g. one or more adaptation parameters) is still valid. If the result of the determination is No, the UE needs to perform step S910 of receiving PDCCH and/or SIB. If the result of Step S1905, the UE can directly proceed to step S930 and perform the transmission, reception, monitoring and/or procedure on the common channel using a configuration and resource occasions determined based on a PDCCH and/or SIB determined earlier.

However, in some embodiments, step 1905 need not be performed. For instance, a UE that is camped on the network energy saving (NES) cell with additional PRACH resources may acquire SIB1 each time before starting a PRACH transmission/procedure or a procedure, reception or transmission on another common channel. In such a case, step S1820 in **Fig. 18** need not be performed.

More generally, the UE may receive an SIB including the indication regarding adaptation of resources for a common channel each time before performing the transmission or reception of the common channel.

As an alternative, before the step S1830 of acquiring the SIB1, the UE may check, in accordance with step S1820, if the information regarding PRACH adaptation in the previously acquired SIB1 is still valid, e.g. based on validity timer or timers such as the previously described first and second timer values.

The SIB1 may carry the indication on the latest information of adaptation of the common channel and on valid resources, (e.g. legacy and/or additional resources (for Rel. 19 UEs) for PRACH).

The indication of valid resources and other parameters may be in accordance with or similar to the above described embodiments related to (in)validity windows, bitmaps, codepoints, or sets of parameters. For instance, new fields in SIB1 may indicate validity windows, invalidity windows, bitmap and/or codepoints, through which UE determines the valid resource occasions (e.g. PRACH occasions (ROs) of one of or both additional and legacy PRACH resources).

Whether or not step S820 of checking the validity of the common channel related parameters from the previously acquired SIB is performed, the indication of common channel adaptation via SIB1 need not trigger system/information modification or update across the system.

Accordingly, when obtaining the SIB1 at a time after the initial SIB1 reception, the UE may obtain from the SIB the parameters from configurations related to the common channel, without updating the remaining parameters other than the configuration parameters for the common channel update.

Indication of parameters related to adaptation of the common channel and its resources via SIB1 only may allow the UE to acquire the latest adaptation information for the common channel before starting a transmission or procedure on the common channel. Further, with such SIB1 based indication, extension or new design of DCI formats for the common channel resource adaptation, possibly involving increased overhead of L1 signaling, may be avoided.

On the other hand, in some embodiments where the indication related to the common channel resource adaptation involves PDCCH based signaling, the gNB may configure a timing of the monitoring occasions for the PDCCH to be aligned with a timing of the valid resource occasions.

For instance, the PDCCH monitoring occasions may be confined to time instances within a limited time interval before the resource occasions for the common channel (e.g. before legacy ROs and/or additional ROs of the PDCCH).

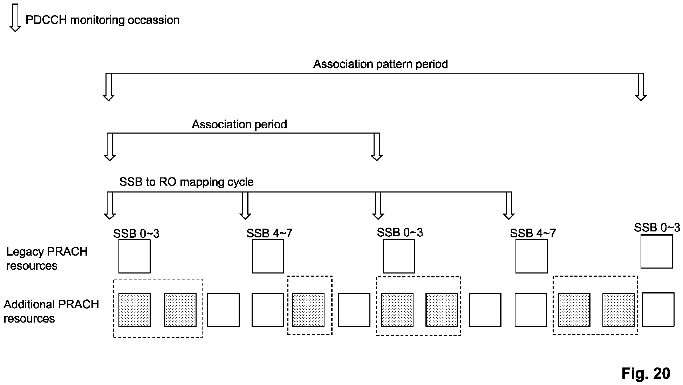

Furthermore, the granularity and/or configurability of the PDCCH monitoring periodicity or search space may be linked to the SSB-to-RO mapping cycle, association period, or association pattern period, e.g. of legacy ROs and/or additional PRACH ROs for NES capable UEs, as shown in **Fig. 20****.**

Confining and/or configuring PDCCH monitoring occasions flexibly may facilitate configuring condensed common channel resource occasions and allow for longer gNB sleep opportunities increasing network energy savings.

As mentioned, PRACH occasions not associated with SS/PBCH blocks after an integer number of association periods, if any, are not used for PRACH transmissions.

Moreover, if configured candidate resources in time for the common channel are determined to be invalid by use of validity windows, invalidity windows, bitmaps, codepoints or other indications, the duration of the association pattern period may be increased when less valid ROs are present. Accordingly, the (L1 or SIB indicated) validity windows and bitmaps or codepoint indications shown in the present disclosure may be used as mechanisms to adapt the association pattern period.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

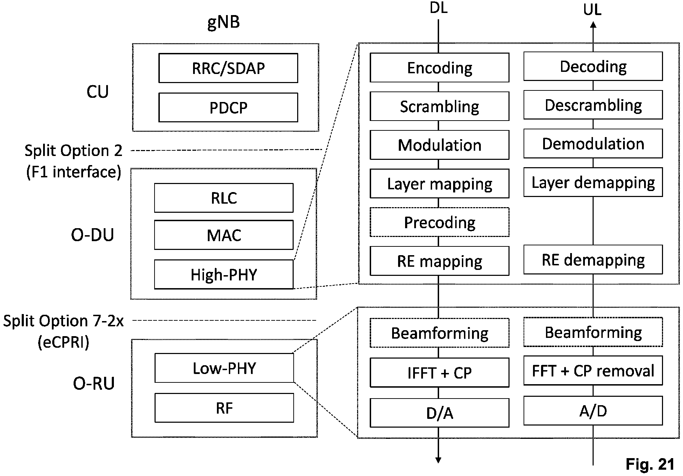

FIG. 21 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively.

PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Aspects

Summarizing, the present disclosure provides the following aspects.

According to aspect 1, provided is a communication apparatus, comprising: a transceiver, which, in operation, receives, via one or both of a physical downlink control channel, PDCCH or system information block, SIB, an indication regarding adaptation of resources for a common channel, wherein the indication indicates one or more adaptation parameters; and circuitry, which, in operation, determines, based on the indication, valid resource occasions for the common channel, wherein the transceiver, in operation, performs transmission, reception, or monitoring of the common channel on the valid resource occasions.

According to aspect 2, provided is the communication apparatus according to aspect 1, wherein the indication indicates one or more adaptation parameters out of:
- one or more time windows delimiting the valid resource occasions or invalid resource occasions for the common channel within a set of configured candidate resource occasions,
- one or more bitmaps or codepoints indicating the valid resource occasions, or
- one or more configuration parameters of a configuration of the resources for the common channel that are to be adapted.

According to aspect 3, provided is the communication apparatus according to aspect 1 or 2, wherein the indication includes an index specifying a set of the one or more adaptation parameters out of a plurality of configured candidate sets of the one or more adaptation parameters.

According to aspect 4, provided is the communication apparatus according to any one of aspects 1 to 3, wherein the one or more configuration parameters include parameters with time of validity, and the SIB includes a timer value specifying the time of validity.

According to aspect 5, provided is the communication apparatus according to aspect 4, wherein the parameters with time of validity include a barring factor for restricting access to the common channel.

According to aspect 6, provided is the communication apparatus according to aspect 5, wherein the SIB includes a first timer value specifying a first time of validity of the barring factor and a second timer value specifying a second time of validity of parameters different from the barring factor, wherein the first timer value is smaller than the second timer value.

According to Aspect 7, provided is the communication apparatus according to any one of aspects 1 to 3, wherein the indication is received via PDCCH and includes a barring factor for restricting access to the common channel.

According to aspect 8, provided is the communication apparatus according to any one of aspects 5 to 7, wherein the barring factor restricting access to the common channel is different from a barring factor restricting access to other services.

According to aspect 9, provided is the communication apparatus according to any one of aspects 1 to 4, wherein access to the common channel is not restricted by a barring factor.

According to aspect 10, provided is the communication apparatus according to any one of aspects 1 to 3 or 9, wherein the transceiver, in operation, receives the SIB including the indication regarding adaptation of resources for a common channel each time before performing the transmission or reception of the common channel.

According to aspect 11, provided is the communication apparatus according to any one of aspects 1 to 10, wherein the candidate resource occasions include first candidate resource occasions and second candidate resource occasions, the second candidate resource occasions being more densely distributed in time than the first candidate resource occasions, and the indication regarding adaptation of resources for a common channel includes an indication whether the second candidate resource occasions are activated.

According to aspect 12, provided is the communication apparatus according to any one of aspects 1 to 11, wherein a timing of the monitoring occasions for the PDCCH is aligned with a timing of the valid resource occasions.

According to aspect 13, provided is a base station, comprising: circuitry which, in operation, determines one or more adaptation parameters regarding adaptation of resources for a common channel; and a transceiver, which, in operation, transmits, via one or both of a physical downlink control channel, PDCCH or system information block, SIB, an indication regarding adaptation of the resources for the common channel, wherein the indication indicates the one or more determined adaptation parameters, and performs reception, transmission, or monitoring of the common channel on the valid resource occasions.

According to aspect 14, provided is the base station according to aspect 13, wherein the indication indicates one or more adaptation parameters out of:
- one or more time windows delimiting the valid resource occasions or invalid resource occasions for the common channel within a set of configured candidate resource occasions,
- one or more bitmaps or codepoints indicating the valid resource occasions, or
- one or more configuration parameters of a configuration of the resources for the common channel that are to be adapted.

According to aspect 15, provided is the communication apparatus according to aspect 13 or 14, wherein the indication includes an index specifying a set of the one or more adaptation parameters out of a plurality of configured candidate sets of the one or more adaptation parameters.

According to aspect, provided is 16 the communication apparatus according to any one of aspects 13 to 15, wherein the one or more configuration parameters include parameters with time of validity, and the SIB includes a timer value specifying the time of validity.

According to aspect 17, provided is the communication apparatus according to aspect 16, wherein the parameters with time of validity include a barring factor for restricting access to the common channel.

According to aspect 18, provided is the communication apparatus according to aspect 17, wherein the SIB includes a first timer value specifying a first time of validity of the barring factor and a second timer value specifying a second time of validity of parameters different from the barring factor, wherein the first timer value is smaller than the second timer value.

According to aspect 19, According to aspect the communication apparatus according to any one of aspects 13 to 15, wherein the indication is transmitted via PDCCH and includes a barring factor for restricting access to the common channel.

According to aspect 20, provided is the communication apparatus according to any one of aspects 17 to 19, wherein the barring factor restricting access to the common channel is different from a barring factor restricting access to other services.

According to aspect 21, provided is the communication apparatus according to any one of aspects 13 to 16, wherein access to the common channel is not restricted by a barring factor.

According to aspect 22, provided is the communication apparatus according to any one of aspects 13 to 15 or 21, wherein the transceiver, in operation, transmits the SIB including the indication regarding adaptation of resources for a common channel each time before performing the transmission, reception or monitoring of the common channel.

According to aspect 23, provided is the communication apparatus according to any one of aspects 13 to 22, wherein the candidate resource occasions include first candidate resource occasions and second candidate resource occasions, the second candidate resource occasions being more densely distributed in time than the first candidate resource occasions, and the indication regarding adaptation of resources for a common channel includes an indication whether the second candidate resource occasions are activated.

According to aspect 24, provided is the base station according to any one of aspects 13 to 23, wherein the circuitry, in operation, configures a timing of the monitoring occasions for the PDCCH to be aligned with a timing of the valid resource occasions.

According to aspect 25, provided is a communication method for a communication apparatus, comprising the steps of: receiving, via one or both of a physical downlink control channel, PDCCH or system information block, SIB, an indication regarding adaptation of resources for a common channel, wherein the indication indicates one or more adaptation parameter; determining, based on the indication, valid resource occasions for the common channel; and performing transmission, reception, or monitoring of the common channel on the valid resource occasions.

The communication method according to the aspect 25 may be provided in combination with aspects corresponding to any one of aspects 2 to 12.

According to aspect 26, provided is a communication method for a base station, comprising the steps of: determining one or more adaptation parameters regarding adaptation of resources for a common channel; transmitting, via one or both of a physical downlink control channel, PDCCH or system information block, SIB, an indication regarding adaptation of the resources for the common channel, wherein the indication indicates the one or more determined adaptation parameters; and performing reception, transmission, or monitoring of the common channel on the valid resource occasions.

The communication method according to the aspect 25 may be provided in combination with aspects corresponding to any one of aspects 14 to 24.

According to aspect 27, provided is an integrated which, in operation, causes a communication apparatus to carry out the steps of the communication method according to aspect 25.

According to aspect 28, provided is an integrated which, in operation, causes a base station to carry out the steps of the communication method according to aspect 26.

According to Aspect 29, provided is a computer-readable medium storing instructions which, when executed by a processor of a communication apparatus, causes the communication apparatus to carry out the steps of the communication method according to aspect 25.

According to aspect 30, provided is a computer-readable medium storing instructions which, when executed by a processor of a base station, causes the base station to carry out the steps of communication method according to aspect 26.

## Claims

1. A communication apparatus, comprising:
a transceiver, which, in operation, receives, via one or both of a physical downlink control channel, PDCCH or system information block, SIB, an indication regarding adaptation of resources for a common channel, wherein the indication indicates one or more adaptation parameters; and
circuitry, which, in operation, determines, based on the indication, valid resource occasions for the common channel,
wherein the transceiver, in operation, performs transmission, reception, or monitoring of the common channel on the valid resource occasions.

2. The communication apparatus according to claim 1, wherein the indication indicates one or more adaptation parameters out of:
• one or more time windows delimiting the valid resource occasions or invalid resource occasions for the common channel within a set of configured candidate resource occasions,
• one or more bitmaps or codepoints indicating the valid resource occasions, or
• one or more configuration parameters of a configuration of the resources for the common channel that are to be adapted.

3. The communication apparatus according to claim 1 or 2, wherein the indication includes an index specifying a set of the one or more adaptation parameters out of a plurality of configured candidate sets of the one or more adaptation parameters.

4. The communication apparatus according to any one of claims 1 to 3, wherein the one or more configuration parameters include parameters with time of validity, and the SIB includes a timer value specifying the time of validity.

5. The communication apparatus according to claim 4, wherein the parameters with time of validity include a barring factor for restricting access to the common channel.

6. The communication apparatus according to claim 5, wherein the SIB includes a first timer value specifying a first time of validity of the barring factor and a second timer value specifying a second time of validity of parameters different from the barring factor, wherein the first timer value is smaller than the second timer value.

7. The communication apparatus according to any one of claims 1 to 3, wherein the indication is received via PDCCH and includes a barring factor for restricting access to the common channel.

8. The communication apparatus according to any one of claims 5 to 7, wherein the barring factor restricting access to the common channel is different from a barring factor restricting access to other services.

9. The communication apparatus according to any one of claims 1 to 4, wherein access to the common channel is not restricted by a barring factor.

10. The communication apparatus according to any one of claims 1 to 3 or 9, wherein the transceiver, in operation, receives the SIB including the indication regarding adaptation of resources for a common channel each time before performing the transmission or reception of the common channel.

11. The communication apparatus according to any one of claims 1 to 10, wherein
the candidate resource occasions include first candidate resource occasions and second candidate resource occasions, the second candidate resource occasions being more densely distributed in time than the first candidate resource occasions, and
the indication regarding adaptation of resources for a common channel includes an indication whether the second candidate resource occasions are activated.

12. A base station, comprising:
circuitry which, in operation, determines one or more adaptation parameters regarding adaptation of resources for a common channel; and
a transceiver, which, in operation, transmits, via one or both of a physical downlink control channel, PDCCH or system information block, SIB, an indication regarding adaptation of the resources for the common channel, wherein the indication indicates the one or more determined adaptation parameters, and performs reception, transmission, or monitoring of the common channel on the valid resource occasions.

13. The base station according to claim 12, wherein the circuitry, in operation, configures a timing of the monitoring occasions for the PDCCH to be aligned with a timing of the valid resource occasions.

14. A communication method for a communication apparatus, comprising the steps of:
receiving, via one or both of a physical downlink control channel, PDCCH or system information block, SIB, an indication regarding adaptation of resources for a common channel, wherein the indication indicates one or more adaptation parameter;
determining, based on the indication, valid resource occasions for the common channel; and
performing transmission, reception, or monitoring of the common channel on the valid resource occasions.

15. A communication method for a base station, comprising the steps of:
determining one or more adaptation parameters regarding adaptation of resources for a common channel;
transmitting, via one or both of a physical downlink control channel, PDCCH or system information block, SIB, an indication regarding adaptation of the resources for the common channel, wherein the indication indicates the one or more determined adaptation parameters; and
performing reception, transmission, or monitoring of the common channel on the valid resource occasions.
